# EUROPÄISCHE PATENTSCHRIFT

(11) **EP 1 944 084 B1**
(45) Veröffentlichungstag und Bekanntmachung des Hinweises auf die Patenterteilung: **26.05.2010**
(21) Anmeldenummer: 07010920.2
(22) Anmeldetag: 01.06.2007
(51) Int. Cl.: B01L 3/00, F15C 5/00

(54) **Ventilvorrichtung für ein Mikrofluidsystem**
Valve device for a micro fluid system
Dispositif de soupape pour un système de microliquide

(30) Priorität: 08.12.2006 EP 06025472
(43) Veröffentlichungstag der Anmeldung: 16.07.2008
(73) Patentinhaber: ibidi GmbH, 82152 Martinsried (DE)
(72) Erfinder: Zantl, Roman, 85598 Baldham (DE)
(74) Vertreter: Grünecker, Kinkeldey, Stockmair & Schwanhäusser Anwaltssozietät

(56) Entgegenhaltungen:
- WO-A-2006/125767
- US-A1- 2002 130 044
- US-A1- 2006 045 810

## Beschreibung

Die Erfindung betrifft ein Mikrofluidsystem mit einer Ventilvorrichtung zum Fördern eines Fluids in dem Mikrofluidsystem.

Für eine Vielzahl von Anwendungen werden über längere Zeiträume Fluide, insbesondere Flüssigkeiten, durch ein Mikrofluidsystem geleitet. Mögliche Anwendungen in diesem Zusammenhang sind beispielsweise Untersuchungen von Biofilmen oder die Beobachtung von Zellen unter kontinuierlichen Flussbedingungen. Derartige Untersuchungen werden beispielsweise in der Arterioskleroseforschung oder im Zusammenhang mit Adhäsionsphänomenen (beispielsweise Rolling) eingesetzt.

Bei herkömmlichen Systemen mit einem offenen Kreislauf wird eine zu transportierende oder zu fördernde Flüssigkeit in einem gesonderten Reservoir, beispielsweise einem Becherglas, bereitgestellt. Mit Hilfe einer Pumpe, beispielsweise einer Membranpumpe oder einer Schlauchquetschpumpe, wird diese Flüssigkeit aus dem Reservoir durch eine Flusskammer, beispielsweise in Form eines Kanals, geleitet.

Die in derartigen Systemen zum Durchströmen verfügbare Flüssigkeitsmenge wird insbesondere durch die Dimensionierung des Reservoirs begrenzt. Typische Flüssigkeitsvolumina liegen zwischen 1 ml und 500 ml.

Die verwendete Flüssigkeitsmenge hängt unter anderem von den entsprechenden Kosten, beispielsweise dem Preis der gelösten Wirkstoffe, und den Anforderungen hinsichtlich einer physiologisch relevanten Geometrie und Dimensionierung der Flusskammer ab. Dabei wird typischerweise ein Verhältnis von Breite zu Höhe der Flusskammer zwischen 5:1 und 100:1 gewählt. Die Flussgeschwindigkeiten werden durch die Kanaldimension und auch die experimentellen Fragestellungen festgelegt. Mikrofluidkanäle weisen typischerweise ein Volumen von 0,1 µl bis 1000 µl auf; typische Flussraten liegen bei 0,5 ml/min bis 500 ml/min.

Bei den oben genannten Flüssigkeitsvolumina in dem Reservoir wird somit das gesamte Reservoirvolumen in einem Zeitraum von 2 Minuten bis etwa 16 Stunden durch das Mikrofluidsystem geleitet. Die durch das Mikrofluidsystem geförderte Flüssigkeit wird dann ebenfalls durch ein gesondertes Reservoir aufgenommen. Wenn diese Flüssigkeit erneut durch das Mikrofluidsystem gefördert wird, erfolgt dies dann mit umgekehrter Strömungsrichtung.

Alternativ zu offenen Kreisläufen können auch geschlossene Kreisläufe verwendet werden, bei denen ein einziges gesondertes Flüssigkeitsreservoir bereitgestellt wird, aus dem die Flüssigkeit entnommen wird und in das diese nach Durchströmen der Flusskammer wieder geleitet wird.

Bei geschlossenen Kreisläufen werden herkömmlicherweise Schlauchquetschpumpen verwendet. Dieser Pumpmechanismus führt jedoch zu einer intensiven mechanischen Belastung, beispielsweise von Zellen, die in der Flüssigkeit suspendiert sind. Damit werden zu untersuchende Effekte in unerwünschter Weise beeinflusst; z. B. kann eine unspezifische Aktivierung von Immunzellen erfolgen, deren Adhäsionsverhalten jedoch aufgrund spezifischer Aktivierung untersucht werden soll.

Angesichts der herkömmlicherweise verwendeten Systeme ist es somit ein der Erfindung zugrunde liegendes Ziel, eine Ventilvorrichtung für ein Mikrofluidsystem sowie ein Mikrofluidsystem bereitzustellen, mit denen in einfacher Weise ein Durchströmen des Mikrofluidsystems über einen längeren Zeitraum ermöglicht wird.

Dieses Problem wird durch ein Mikrofluidsystem gemäß Anspruch 1 gelöst.

Es wird eine Ventilvorrichtung für ein Mikrofluidsystem bereitgestellt, wobei das Mikrofluidsystem ein erstes und ein zweites Fluidreservoir, eine Flusskammer, eine Fluidkanalanordnung und eine Fördereinrichtung umfasst, wobei das erste Fluidreservoir über die Flusskammer mit dem zweiten Fluidreservoir durch die Fluidkanalanordnung fluidisch verbunden ist, wobei die Ventilvorrichtung aus einem ersten Zustand in einen zweiten Zustand bringbar ist, sodass im ersten Zustand ein Fluid mittels der Fördereinrichtung vom ersten Fluidreservoir durch die Flusskammer mit einer vorherbestimmten Strömungsrichtung in das zweite Fluidreservoir förderbar ist und im zweiten Zustand ein Fluid mittels der Fördereinrichtung vom zweiten Fluidreservoir durch die Flusskammer mit der vorherbestimmten Strömungsrichtung in das erste Fluidreservoir förderbar ist.

Eine derartige Ventilvorrichtung ermöglicht es somit in vorteilhafter Weise, ein Fluid kontinuierlich, d. h. ohne Unterbrechung, durch das Mikrofluidsystem zu fördern. Dabei durchströmt das Fluid die Flusskammer mit einer vorherbestimmten Strömungsrichtung unabhängig davon, ob das Fluid aus dem ersten in das zweite Fluidreservoir oder aus dem zweiten in das erste Fluidreservoir gefördert wird.

Ein Fluidreservoir umfasst einen Hohlraum zur Aufnahme eines Fluids. Das Fluidreservoir kann, muss aber nicht zur Umgebung hin offen sein. Eine Flusskammer umfasst einen Hohlraum, durch den ein Fluid strömen kann. Die Flusskammer kann einen Kanal aufweisen. Die Flusskammer kann, muss aber nicht zur Umgebung hin offen sein. Insbesondere kann es sich bei der Flusskammer um einen zur Umgebung hin geschlossenen Kanal handeln. Ein Fluidkanal und/oder eine Flusskammer können ein Verhältnis von Breite zu Höhe zwischen 5:1 und 100:1 aufweisen. Ein Fluidkanal und/oder eine Flusskammer können ein Volumen von 0,1 µl bis 1000 µl aufweisen.

Die Ventilvorrichtung kann insbesondere automatisch und/oder eigengesteuert aus dem ersten Zustand in den zweiten Zustand bringbar sein.

Das Fluid kann ein Gas oder eine Flüssigkeit sein.

Die Ventilvorrichtung umfasst vier Sperrventile, die nach Art eines Brückengleichrichters angeordnet sind.

Ein Sperrventil kann insbesondere einen Fluidstrom nur in einer Strömungsrichtung durchlassen. Durch eine Brückengleichrichteranordnung wird in vorteilhafter Weise erreicht, dass sowohl bei Förderung aus dem ersten Fluidreservoir als auch bei Förderung aus dem zweiten Fluidreservoir das Fluid die Flusskammer immer in gleicher Strömungsrichtung durchströmt.

Die Ventilvorrichtung umfasst vier Sperrventile und vier Anschlüsse zum fluidischen Verbinden der Ventilvorrichtung mit dem ersten Fluidreservoir, dem zweiten Fluidreservoir, einer ersten Mündung der Flusskammer, insbesondere einer Zuflussmündung in Strömungsrichtung, und einer zweiten Mündung der Flusskammer, insbesondere einer Abflussmündung in Strömungsrichtung. Die Ventilvorrichtung ist derart ausgebildet , dass jedes Fluidreservoir mit der ersten und der zweiten Mündung fluidisch verbindbar ist, wobei entlang jeder dieser Verbindungen eines der Sperrventile angeordnet ist. Insbesondere kann die Ventilvorrichtung derart ausgebildet sein, dass jedes Fluidreservoir mit der ersten Mündung und der zweiten Mündung fluidisch verbindbar ist, sodass entlang jeder dieser Verbindungen eines der Sperrventile so angeordnet ist, dass die Durchlassrichtung jedes Sperrventils auf die Zuflussmündung gerichtet ist.

Auf diese Weise wird eine Brückengleichrichteranordnung erreicht, mit der kontinuierlich abwechselnd aus dem ersten und dem zweiten Fluidreservoir das Fluid mit gleicher Strömungsrichtung durch die Flusskammer gefördert wird.

Wenigstens einer der beiden Anschlüsse zum Verbinden der Ventilvorrichtung mit einer Mündung der Flusskammer kann eine Verzweigung aufweisen, so dass die entsprechende Mündung über den einen Anschluss mit zwei Sperrventilen verbindbar ist. Insbesondere können beide Anschlüsse zum Verbinden der Ventilvorrichtung mit einer der Mündungen jeweils eine Verzweigung aufweisen, so dass jede Mündung jeweils über einen Anschluss mit zwei Sperrventilen verbindbar ist. Die Verzweigung kann beispielsweise in Form eines Y-Stücks oder eines T-Stücks ausgebildet sein.

Wenigstens eines der Sperrventile der zuvor beschriebenen Ventilvorrichtungen kann ein fremdgesteuertes Sperrventil sein. Fremdgesteuert bedeutet, dass das Ventil von außen steuerbar ist. Damit kann das Ventil aktiv beispielsweise geöffnet oder geschlossen werden, unabhängig von Strömungsrichtung, Druck, Strömungsgeschwindigkeit, etc.

Wenigstens eines der Sperrventile der zuvor beschriebenen Ventilvorrichtungen kann ein Rückschlagventil sein. Das Rückschlagventil kann unbelastet oder federbelastet sein. Beispielsweise kann das Rückschlagventil ein unbelastetes Kugelrückschlagventil sein. Das Rückschlagventil kann fremdgesteuert oder eigengesteuert sein. Im Falle eines fremdgesteuerten Rückschlagventils ist dieses entsperrbar. Insbesondere können alle vier Sperrventile als Rückschlagventil ausgebildet sein. Wenigstens eines der Sperrventile kann ein Quetschventil sein. Insbesondere können alle vier Sperrventile als Quetschventil ausgebildet sein.

Die zuvor beschriebenen Ventilvorrichtungen können in einem Substrat ausgebildet sein. Dabei können beispielsweise die Sperrventile und die Sperrventile verbindende Fluidkanäle in dem Substrat vorgesehen sein. Die verbindenden Fluidkanäle können derart angeordnet sein, dass eine Brückengleichrichteranordnung der Sperrventile erhalten wird. Weiterhin kann das Substrat vier Anschlüsse zum fluidischen Verbinden mit dem ersten Fluidreservoir, dem zweiten Fluidreservoir, einer Zuflussmündung der Flusskammer in Strömungsrichtung und einer Abflussmündung der Flusskammer in Strömungsrichtung umfassen.

Das Substrat kann insbesondere plan ausgebildet sein. Das Substrat kann eine Bodenplatte und eine Deckplatte umfassen, wobei in der Deckplatte Aussparungen vorgesehen sind und die Deckplatte mit der Bodenplatte flächig verbunden ist, so dass durch die Aussparungen Fluidkanäle und/oder zumindest ein Teil, insbesondere der Sitz, eines Sperrventils gebildet werden. Das Substrat kann eine weitere Deckplatte umfassen, insbesondere wenn auf beiden Seiten der ersten Deckplatte Aussparungen vorgesehen sind, die dann durch die Bodenplatte und die weitere Deckplatte abgedeckt werden. In diesem Fall wird die erste Deckplatte jeweils auf einer Seite flächig mit der Bodenplatte und der weiteren Deckplatte verbunden. Die Bodenplatte und/oder die Deckplatte kann einen Kunststoff umfassen. Insbesondere kann die Deckplatte als ein Spritzgussteil und die Bodenplatte als eine Folie ausgebildet sein. Bei Verwendung einer zweiten Deckplatte kann diese ebenfalls als eine Folie ausgebildet sein.

Die zuvor beschriebenen Ventilvorrichtungen können vier Sperrventile und vier Anschlüsse zum fluidischen Verbinden mit dem ersten Fluidreservoir, dem zweiten Fluidreservoir, einer Druckvorrichtung und der Umgebung umfassen, wobei die Ventilvorrichtung derart ausgebildet ist, dass jedes Fluidreservoir jeweils über ein Sperrventil mit der Druckvorrichtung und über ein anderes Sperrventil mit der Umgebung verbindbar ist. Eine derartige Ventilvorrichtung ermöglicht, dass durch gleichbleibendes Anlegen von Druck und geeignete Schaltung (Öffnen und Schließen) der Sperrventile ein Fluid von einem Fluidreservoir in ein anderes Fluidreservoir (ggf. über eine zusätzliche, wie oben beschriebene Ventilvorrichtung und eine Flusskammer) gefördert werden kann. Auf diese Weise wird der Nachteil vermieden, dass bei einem abwechselnd an die Fluidreservoire angelegten Über- und Unterdruck der Sollwert des Überdrucks nicht gleich schnell wie der Sollwert des Unterdrucks erreicht wird. Unter Umgebung ist insbesondere der Umgebungsdruck gemeint; somit lässt sich das jeweilige Fluidreservoir über die entsprechende Fluidverbindung nach außen öffnen.

Dabei kann insbesondere die Ventilvorrichtung sechs Anschlüsse zum fluidischen Verbinden umfassen, wobei jedes Fluidreservoir über zwei Anschlüsse mit der Ventilvorrichtung derart verbindbar ist, dass jedes Fluidreservoir jeweils über ein Sperrventil mit der Druckvorrichtung und über ein anderes Sperrventil mit der Umgebung verbindbar ist.

In dem Mikrofluidsystem kann eine kontinuierliche Förderung eines Fluids mit gleichbleibender Strömungsrichtung durch eine Flusskammer erzielt werden.

Die Fördereinrichtung kann eine erste Druckvorrichtung, insbesondere eine Luftdruckpumpe, eine Kolbenpumpe, eine Membranpumpe, eine Schlauchquetschpumpe, eine Spritze oder eine Spritzenpumpe, aufweisen, um das Innere des ersten Fluidreservoirs mit Druck zu beaufschlagen. Die Druckvorrichtung kann je nach Art der Anwendung und Umgebungsbedingungen geeignet gewählt werden. So kann beispielsweise eine Spritzenpumpe gewählt werden, wenn die Ventilvorrichtungen eigengesteuerte Rückschlagventile aufweist, da mit dieser Art von Pumpe ein ausreichender Differenzdruck zum Verschließen der Rückschlagventile aufgebaut werden kann. Im Falle einer Luftdruckpumpe können insbesondere fremdgesteuerte Ventile eingesetzt werden.

Mit Druck wird sowohl ein Überdruck als auch ein Unterdruck gemeint. Bei einem Unterdruck würde das Fluid somit angesaugt werden.

Bei den zuvor beschriebenen Mikrofluidsystemen kann das Fluid eine Flüssigkeit sein und die Fördereinrichtung ein hydrophobes Ferrofluid umfassen, das derart in dem ersten Fluidreservoir angeordnet ist, dass die Flüssigkeit mittels eines Magnetfeldes über das Ferrofluid mit Druck beaufschlagbar ist.

Ein Ferrofluid umfasst eine Trägerflüssigkeit, in der magnetische Partikel kolloidal suspendiert sind. Die Trägerflüssigkeit kann beispielsweise Perfluorkarbon umfassen. Durch ein Magnetfeld kann ein derartiges Ferrofluid mit einer Kraft beaufschlagt werden, sodass dieses wiederum bei einer entsprechend gerichteten Kraft die Flüssigkeit mit Druck beaufschlagt. Das Magnetfeld kann beispielsweise über mittels beweglicher Magnete, beispielsweise rotierender Magnete, oder mittels Induktion erzeugt werden. Auf diese Weise kann insbesondere in kleinen Volumina eine Flüssigkeit in einfacher Weise gefördert werden. Weiterhin kann das Kontaminationsrisiko verringert werden, da zwischen dem Inneren des Reservoirs und der Umgebung kein direkter Kontakt bestehen muss.

Die Fördereinrichtung der zuvor beschriebenen Mikrofluidsysteme kann einen Kolben aufweisen, der derart angeordnet ist, dass das Innere des ersten Fluidreservoirs mit Druck beaufschlagbar ist. Der Kolben kann beispielsweise am oder im ersten Fluidreservoir angeordnet sein.

Bei den zuvor beschriebenen Mikrofluidsystemen kann die Fördereinrichtung einen Kolben aufweisen, der derart angeordnet ist, dass das Innere des zweiten Fluidreservoirs mit Druck beaufschlagbar ist. Die Fördereinrichtung kann einen Kolben aufweisen, der derart angeordnet ist, dass er durch in das zweite Fluidreservoir befördertes Fluid bewegbar ist. Insbesondere durch Letzteres wird ermöglicht, dass das zweite Fluidreservoir zur Umgebung hin abgeschlossen ist, ohne jedoch eine Entlüftungsvorrichtung zu erfordern.

Bei den zuvor beschriebenen Mikrofluidsystemen kann wenigstens ein Teil des ersten und/oder des zweiten Fluidreservoirs durch einen Spritzenzylinder gebildet sein. Durch eine Spritze können somit ein Fluidreservoir, nämlich der Spritzenzylinder bzw. das Spritzengehäuse, und zumindest ein Teil einer Druckvorrichtung, nämlich der Spritzenkolben, bereitgestellt werden.

Das Fluid bei den oben bezeichneten Mikrofluidsystemen kann eine Flüssigkeit sein und die Fördereinrichtung der Mikrofluidsysteme kann derart ausgebildet sein, dass zwischen dem Fluid und wenigstens einer Druckvorrichtung eine fluidische Verbindung bereitgestellt ist, in der wenigstens teilweise ein Gas vorgesehen ist. Das Gas kann insbesondere Luft sein.

Zwischen der Druckvorrichtung und dem Fluid ist somit eine Gassäule vorgesehen.

In diesem Fall kann beispielsweise zunächst das Gas mit Druck beaufschlagt werden, über das dann die Flüssigkeit im Fluidreservoir mit Druck beaufschlagt wird, sodass eine Flüssigkeitsförderung erzielt wird. Somit können beispielsweise die Fluidreservoire und die Flusskammer mit der diese verbindenden Fluidkanalanordnung unter definierten Umgebungsbedingungen, beispielsweise in einem Brutschrank, gelagert werden. Die Fördereinrichtung kann hiervon gesondert gelagert werden, wobei die Förderung des Fluids erfolgt, indem eine zwischen der Fördereinrichtung und dem ersten Fluidreservoir vorgesehene Gassäule mit Druck beaufschlagt wird. Damit wird insbesondere vermieden, dass die Fördereinrichtung die definierten Umgebungsbedingungen für die Fluidreservoire und die Flusskammer, beispielsweise aufgrund einer Erwärmung, beeinflusst.

Insbesondere können eine oder beide der zuvor beschriebenen Druckvorrichtungen über einen, wenigstens teilweise, gasgefüllten Fluidkanal, beispielsweise einen Schlauch, mit einem jeweiligen Fluidreservoir derart verbunden sein, dass das Innere des Fluidreservoirs mit Druck beaufschlagbar ist.

Die Fördereinrichtung der zuvor beschriebenen Mikrofluidsysteme kann eine zweite Druckvorrichtung, insbesondere Druckpumpe, eine Kolbenpumpe, eine Membranpumpe, eine Schlauchquetschpumpe, eine Spritze oder eine Spritzenpumpe, aufweisen, um das Innere des zweiten Fluidreservoirs mit Druck zu beaufschlagen.

Insbesondere kann die Fördereinrichtung derart ausgebildet sein, dass das Innere des zweiten Fluidreservoirs mit einem Unterdruck beaufschlagbar ist, während die erste Druckvorrichtung das Innere des ersten Fluidreservoirs mit einem Überdruck beaufschlagt.

Die zuvor beschriebenen Mikrofluidsysteme können weiterhin eine Sensoreinrichtung zum Bestimmen eines Fluidstroms, eines Fluidstands und/oder eines Fluiddrucks im Mikrofluidsystem, insbesondere in einem oder beiden Fluidreservoiren, umfassen. Dies ermöglicht eine Überprüfung und Überwachung der Strömung und somit der Funktionsfähigkeit des Systems.

Die Mikrofluidsysteme können weiterhin eine Steuerungseinrichtung zum Steuern der Ventilvorrichtung, der Fördereinrichtung und/oder der Sensoreinrichtung umfassen. Diese Steuerungseinrichtung kann insbesondere derart ausgebildet sein, dass eine automatische Steuerung gemäß vorherbestimmter Parameter durchführbar ist. Insbesondere kann die Steuerungseinrichtung derart ausgebildet sein, dass die Flusskammer kontinuierlich mit Fluid durchströmbar ist.

Die Ventilvorrichtung des Mikrofluidsystems kann vier fremdgesteuerte Sperrventile umfassen und die Steuerungseinrichtung zum Steuern der Ventilvorrichtung kann derart ausgebildet sein, dass gleichzeitig jeweils zwei Sperrventile geschlossen und zwei Sperrventile geöffnet werden.

Die Mikrofluidsystem kann umfassen:
- ein erstes und ein zweites Fluidreservoir,
- eine Flusskammer,
- eine Fluidkanalanordnung, die derart angeordnet ist, dass das erste Fluidreservoir über die Flusskammer mit dem zweiten Fluidreservoir fluidisch verbunden ist,
- eine Fördereinrichtung zum Fördern eines Fluids vom ersten Fluidreservoir über die Flusskammer in das zweite Fluidreservoir,
- eine erste Ventilvorrichtung mit vier Sperrventilen und vier Anschlüssen, über die die erste Ventilvorrichtung mit dem ersten Fluidreservoir, dem zweiten Fluidreservoir, einer ersten Mündung der Flusskammer und einer zweiten Mündung der Flusskammer fluidisch verbindbar ist,
- eine zweite Ventilvorrichtung mit vier Sperrventilen und vier Anschlüssen, über die die zweite Ventilvorrichtung mit dem ersten Fluidreservoir, dem zweiten Fluidreservoir, einer Druckvorrichtung und der Umgebung fluidisch verbindbar ist, wobei die Ventilvorrichtung derart ausgebildet ist, dass jedes Fluidreservoir jeweils über ein Sperrventil mit der Druckvorrichtung und über ein anderes Sperrventil mit der Umgebung verbindbar ist.

Bei den ersten und/oder zweiten Ventilvorrichtungen kann es sich insbesondere um eine der oben beschriebenen Ventilvorrichtungen handeln. Insbesondere kann die Fördereinrichtung die zweite Ventilvorrichtung umfassen.

Der Anschluss zum Verbinden mit der Druckvorrichtung kann eine Verzweigung, beispielsweise in Form eines Y-Stücks, aufweisen, so dass die Druckvorrichtung jeweils über ein Sperrventil mit beiden Fluidreservoiren verbindbar ist. Die zweite Ventilvorrichtung kann sechs Anschlüsse aufweisen, so dass das erste Fluidreservoir über einen ersten Anschluss mit einem ersten Sperrventil und über einen zweiten Anschluss mit einem zweiten Sperrventil und das zweite Fluidreservoir über einen dritten Anschluss mit einem dritten Sperrventil und über einen vierten Anschluss mit einem vierten Sperrventil verbindbar ist, und das erste und vierte Sperrventil über einen Anschluss mit der Druckvorrichtung und das zweite und dritte Sperrventil über einen Anschluss mit der Umgebung verbindbar sind. Der Anschluss zum Verbinden der zweiten Ventilvorrichtung mit der Umgebung kann eine Verzweigung aufweisen, so dass zwei Sperrventile der Ventilvorrichtung über diesen Anschluss mit der Umgebung verbindbar sind. Der Anschluss zum Verbinden der zweiten Ventilvorrichtung mit der Druckvorrichtung kann eine Verzweigung aufweisen, so dass zwei Sperrventile der Ventilvorrichtung über diesen Anschluss mit der Druckvorrichtung verbindbar sind.

Nachfolgend werden anhand der Figuren Ausführungsbeispiele der Erfindung beschrieben. Dabei zeigt:
- Figur 1: schematisch ein Beispiel eines Mikrofluidsystems;
- Figur 2: ein Beispiel einer Ventilvorrichtung zur Verwendung in einem solchen Mikrofluidsystem;
- Figur 3: schematisch eine Querschnittsansicht eines Teils einer Ventilvorrichtung in einem Substrat; und
- Figur 4: ein Beispiel einer Flusskammer zur Verwendung in einem Mikrofluidsystem.

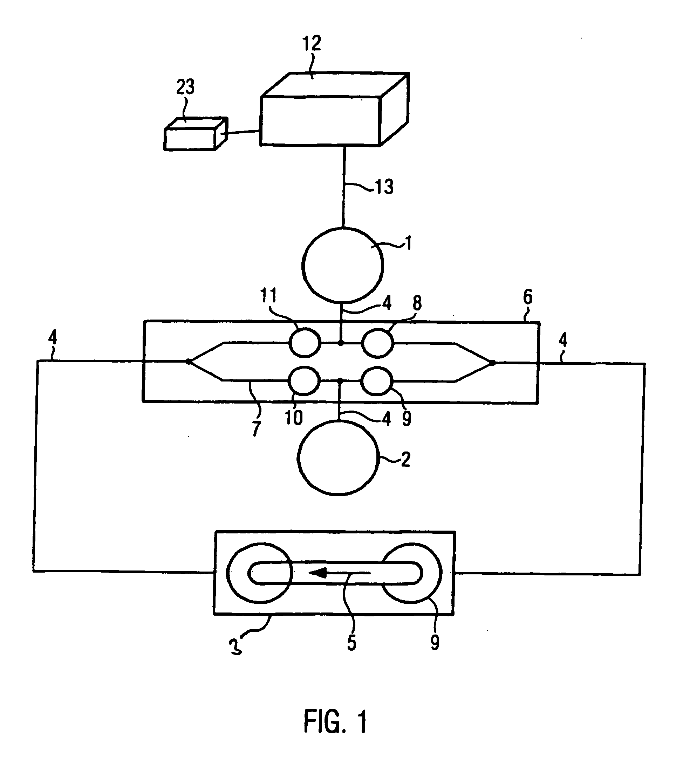

Das in Figur 1 gezeigte Mikrofluidsystem umfasst zunächst zwei Fluidreservoire 1 und 2. In dem nachfolgenden Beispiel soll das Fluid eine Flüssigkeit sein; grundsätzlich kann das Fluid jedoch auch gasförmig sein. Jedes Fluidreservoir kann beispielsweise zylinderförmig, wie in Form eines Becherglases, ausgebildet sein. Das Mikrofluidsystem umfasst weiterhin eine Flusskammer 3, durch die ein Flüssigkeitsstrom mit vorherbestimmter Strömungsrichtung 5 gefördert werden soll. Dies dient dazu, um beispielsweise Adhäsionsphänomene in der Flusskammer zu untersuchen.

Zur Erzeugung des Flüssigkeitsstroms wird die Flüssigkeit mittels einer Fluidkanalanordnung von den Reservoiren 1 und 2 zur Flusskammer 3 gefördert. Die Fluidkanalanordnung umfasst die Abschnitte 4. Weiterhin ist eine Ventilvorrichtung 6 vorgesehen, mit deren Hilfe der Flüssigkeitsstrom geregelt wird. Die Ventilvorrichtung 6 ist derart ausgebildet, dass gewährleistet wird, dass der Flüssigkeitsstrom immer mit der dargestellten Strömungsrichtung 5 durch die Flusskammer transportiert wird. In dem gezeigten Beispiel umfasst die Ventilvorrichtung 6 vier Ventile 8, 9, 10 und 11 sowie eine Fluidkanalanordnung 7. Die Anordnung der Ventile 8 bis 11 sowie der Fluidkanalanordnung 7 in der Ventilvorrichtung 6 ist dabei derart gewählt, dass ein Brückengleichrichter entsteht.

Im Betrieb des Mikrofluidsystems werden zunächst das erste Fluidreservoir 1 sowie alle fluidischen Verbindungen zwischen diesem Reservoir und dem zweiten Fluidreservoir 2, inklusive der Flusskammer 3, mit einer Flüssigkeit gefüllt. Danach wird das Innere des ersten Flüssigkeitsreservoirs 1 und somit auch die darin befindliche Flüssigkeit mit einem Druck beaufschlagt. Die Ventile 8 und 10 werden geöffnet, die Ventile 9 und 11 geschlossen. Auf diese Weise fließt die Flüssigkeit mit der Strömungsrichtung 5 aus dem ersten Flüssigkeitsreservoir 1 in das zweite Flüssigkeitsreservoir 2.

Um die Beaufschlagung mit Druck durchzuführen, umfasst die Fördereinrichtung eine Druckvorrichtung. Diese Druckvorrichtung kann auf verschiedene Art und Weise ausgebildet sein. Es kann sich beispielsweise um eine Kolbenpumpe handeln, deren Kolben in dem ersten Flüssigkeitsreservoir 1 derart angeordnet ist, dass er in unmittelbarem Kontakt mit der Flüssigkeit steht, von dieser also benetzt wird. Mit Hilfe des Kolbens kann die Flüssigkeit mit einem Überdruck beaufschlagt werden, sodass sie aus dem Flüssigkeitsreservoir gepresst wird. Alternativ kann die Druckvorrichtung beispielsweise auch eine Spritzenpumpe sein, wobei in diesem Fall der Spritzenzylinder beispielsweise das erste Fluidreservoir bilden kann.

Gemäß einer Alternative kann, wie in Figur 1 gezeigt, zwischen der Pumpe 12 und dem Fluidreservoir 1 eine gasgefüllte, gasdichte Schlauchverbindung 13 vorgesehen sein, sodass zwischen der Pumpe 12 und der Flüssigkeit in dem Fluidreservoir 1 eine Gassäule aufgebaut ist. Dabei kann es sich insbesondere um eine Luftsäule handeln. In diesem Fall kann die Pumpe 12 beispielsweise eine Luftpumpe sein, mit der das Gas in der Schlauchverbindung 13 mit Druck beaufschlagt wird, sodass eine entsprechende Druckbeaufschlagung der Flüssigkeit erfolgt. In analoger Weise könnte die Pumpe beispielsweise auch als Spritzenpumpe ausgebildet sein, wobei auch hier ein Gas in der Spritze mit Druck beaufschlagt wird.

Die Verwendung einer solchen, von dem Flüssigkeitsreservoir 1 gesonderten Pumpe, hat den Vorteil, dass zum Einen eine mögliche Kontamination der Flüssigkeit durch Kontakt mit Pumpenteilen vermieden werden kann. Weiterhin erlaubt es eine solche Anordnung, dass die Flüssigkeitsreservoire 1 und 2, die Fluidkanalanordnung 4, die Ventilvorrichtung 6 und die Flusskammer 3 unter vorherbestimmten Umgebungsbedingungen gelagert werden. Beispielsweise könnten diese Elemente in einem Brutschrank bei einer Temperatur von 37° Celsius, 5 % CO₂-Atmosphäre und 80 % Luftfeuchtigkeit aufbewahrt sein. Damit lassen sich insbesondere lebende Zellen in vorteilhafter Weise untersuchen.

Die Pumpe 12 hingegen kann außerhalb des Brutschranks angeordnet sein, sodass beispielsweise eine unerwünschte Erwärmung im Brutschrank aufgrund der Abwärme der Pumpe vermieden werden kann. Über den gasgefüllten Schlauch 13 wird die Verbindung zwischen der Pumpe 12 und dem Fluidreservoir 1 hergestellt.

Als Druckvorrichtung können auch hydrophobe Ferrofluide eingesetzt werden, was insbesondere von Vorteil ist, wenn die Druckbeaufschlagung in einem Hohlraum mit kleinem Querschnitt zu erfolgen hat. Bei einem hydrophoben Ferrofluid kann es sich beispielsweise um Perfluorkarbon handeln, in dem Teilchen aus Eisen, Magnetit oder Kobalt suspendiert sind. Durch Anlegen eines Magnetfeldes wird eine Kraft auf das Ferrofluid ausgeübt, wodurch dieses eine damit in unmittelbarem Kontakt stehende Flüssigkeit mit Druck beaufschlagen kann. Das Magnetfeld lässt sich beispielsweise mittels Induktion oder bewegter Magnete erzeugen.

Bei dem zweiten Fluidreservoir 2 kann es sich beispielsweise um ein nach oben offenes zylindrisches Gefäß, beispielsweise ein Becherglas, handeln. Alternativ kann das zweite Fluidreservoir zur Umgebung hin geschlossen sein, wobei im Falle eines gasdichten Verschlusses eine Entlüftungsvorrichtung, beispielsweise ein entsprechendes Ventil, vorgesehen sein sollte. Ist das Flüssigkeitsreservoir 2 verschlossen und weist eine Entlüftungsvorrichtung auf, so kann diese wiederum einen Sterilfilter enthalten, um eine Kontamination des Mikrofluidsystems zu vermeiden.

Gemäß einer weiteren Alternative kann ein beweglicher Kolben vorgesehen sein, der in direktem Kontakt mit in das zweite Flüssigkeitsreservoir 2 geförderter Flüssigkeit steht oder der von dieser Flüssigkeit durch ein Gas oder eine Gassäule getrennt ist. Wird die Flüssigkeit aus dem ersten Flüssigkeitsreservoir 1 in das Flüssigkeitsreservoir 2 gepumpt, so wird der Kolben im zweiten Flüssigkeitsreservoir 2 mit Druck beaufschlagt und bewegt sich in einer aus dem Flüssigkeitsreservoir führenden Richtung.

Zu einem bestimmten Zeitpunkt, beispielsweise wenn der Flüssigkeitsstand in dem ersten Flüssigkeitsreservoir 1 einen vorherbestimmten Pegel unterschreitet, soll nun Flüssigkeit aus dem zweiten Flüssigkeitsreservoir 2 mit gleicher Strömungsrichtung 5 durch die Flusskammer 3 in das erste Flüssigkeitsreservoir 1 gefördert werden. Hierzu kann beispielsweise auf Seiten des ersten Flüssigkeitsreservoirs die Flüssigkeit mit einem Unterdruck beaufschlagt werden, sodass die Flüssigkeit aus dem zweiten Flüssigkeitsreservoir 2 in das erste Flüssigkeitsreservoir 1 gesaugt wird.

Sobald die Flüssigkeit nicht mehr aus dem Flüssigkeitsreservoir 1 ausströmt, sondern in dieses einströmt, wird die Ventilvorrichtung 6 aus dem ersten Zustand, in dem die Ventile 8 und 10 geöffnet und die Ventile 9 und 11 geschlossen waren, in einen zweiten Zustand gebracht, in dem die Ventile 8 und 10 geschlossen, die Ventile 9 und 11 geöffnet sind. Auf diese Weise wird erreicht, dass trotz der umgekehrten Strömungsrichtung im ersten und zweiten Fluidreservoir die Strömungsrichtung 5 durch die Flusskammer 3 erhalten bleibt. Weiterhin kann auf diese Weise gewährleistet werden, dass in der Flusskammer 3 kontinuierlich ein Strom aufrechterhalten wird.

Alternativ oder zusätzlich zu dem Anlegen eines Unterdrucks im ersten Flüssigkeitsreservoir 1 kann die Flüssigkeit im zweiten Flüssigkeitsreservoir 2 mit einem Überdruck beaufschlagt werden. Zu diesem Zweck ist auch auf Seiten des zweiten Flüssigkeitsreservoirs 2 eine Druckvorrichtung vorgesehen, die beispielsweise analog der ersten Druckvorrichtung ausgebildet ist. Es wird jedoch darauf hingewiesen, dass auch eine andere Druckvorrichtung auf Seiten des zweiten Flüssigkeitsreservoirs vorgesehen sein kann.

Da insbesondere Flüssigkeitsreservoire und die Flusskammer unter vorherbestimmten Umgebungsbedingungen gelagert werden sollen, ist es jedoch von Vorteil, wenn auch zwischen der Druckvorrichtung für das zweite Flüssigkeitsreservoir und dem zweiten Flüssigkeitsreservoir eine fluidische Verbindung mit einer Gassäule vorgesehen ist, sodass die zweite Druckvorrichtung gesondert von dem zweiten Flüssigkeitsreservoir gelagert werden kann. Beispielsweise kann es sich bei der ersten und der zweiten Druckvorrichtung um eine Luftdruckpumpe oder eine Spritzenpumpe handeln, bei der jeweils der Kolben der Spritze in zwei Richtungen bewegbar ist, sodass das Innere der beiden Fluidreservoire jeweils komplementär mit einem Überdruck bzw. einem Unterdruck beaufschlagt werden kann.

Die Ventilvorrichtung kann auf verschiedene Arten ausgebildet sein. Bei der in Figur 1 illustrierten Ausführung in Form eines Brückengleichrichters sind die einzelnen Ventile vorzugsweise Sperrventile, die beispielsweise einen Flüssigkeitsstrom nur in eine Richtung durchlassen.

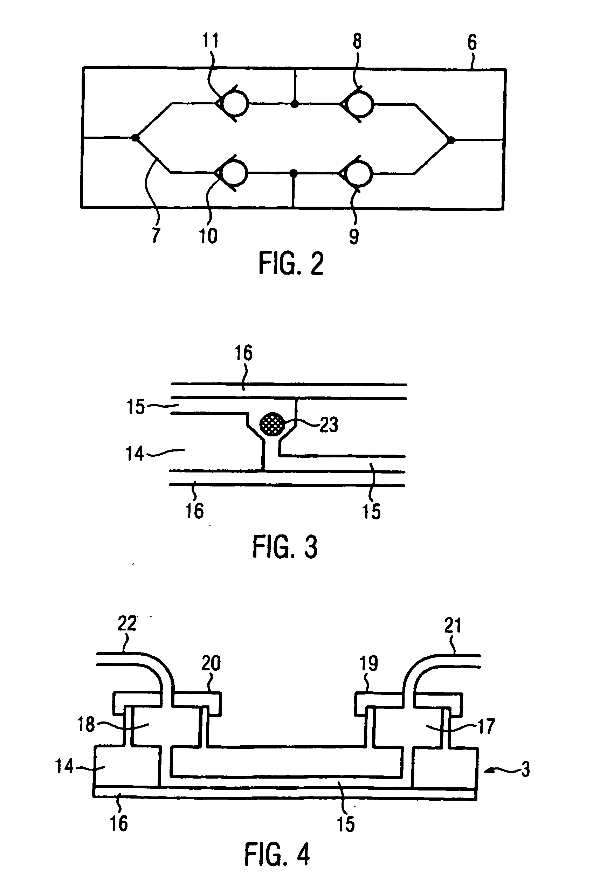

Ein Ausführungsbeispiel einer derartigen Ventilvorrichtung ist in Figur 2 schematisch illustriert. Auch hier umfasst die Ventilvorrichtung vier Sperrventile 8 bis 11, die hier als Rückschlagventile ausgebildet sind. In dem gezeigten Ausführungsbeispiel handelt es sich um unbelastete Rückschlagventile, allerdings sind auch federbelastete Rückschlagventile möglich.

Die Ventilvorrichtung 6 umfasst somit vier Rückschlagventile und vier fluidische Anschlüsse zum fluidischen Verbinden der Ventilvorrichtung 6 mit den beiden Fluidreservoiren 1 und 2 sowie einer Zuflussmündung und einer Abflussmündung der Flusskammer. Die Rückschlagventile sind derart angeordnet, dass die Durchlassrichtung auf die Zuflussmündung gerichtet ist. Mit anderen Worten ist der rechte fluidische Anschluss der Ventilvorrichtung zum fluidischen Verbinden mit der Zuflussmündung der Flusskammer vorgesehen.

Statt der in dem gezeigten Beispiel eigengesteuerten Rückschlagventile können jedoch auch fremdgesteuerte Ventile eingesetzt werden, die aktiv geöffnet und geschlossen werden. Dabei kann es sich beispielsweise um Quetschventile handeln.

In einer Ausführungsform kann das Rückschlagventil lediglich eine Kugel umfassen, die durch den Fluiddruck in ihren Sitz, der beispielsweise konisch ausgeführt sein kann, gedrückt wird. Die Verwendung derartiger Rückschlagventile in einer Ventilvorrichtung 6 ist insbesondere bei der Verwendung von Spritzenpumpen von Vorteil, mit denen ein konstantes Fluidvolumen gepumpt wird, sodass ein ausreichender Differenzdruck zum Verschließen der jeweils sperrenden Ventile erzielt wird. Insbesondere bei dem Einsatz von Luftdruckpumpen werden vorzugsweise fremdgesteuerte Ventile eingesetzt.

Die Fluidverbindungen 7 zwischen den vier fluidischen Anschlüssen und den Ventilen können in einer einfachen Form durch Schläuche mit geeigneter Dimensionierung hergestellt werden. Es ist zu beachten, dass die Ventilvorrichtung nicht in Form einer starren Anordnung ausgebildet sein muss.

Gemäß einer Alternative kann die in Figur 2 gezeigt Ventilvorrichtung auch in einem planen Substrat ausgebildet sein. In diesem Fall würde Figur die eine schematische Draufsicht auf ein derartiges Substrat darstellen. In dem Substrat sind dann die Fluikanalanordnung 7 sowie die Sperrventile 8 -11 vorgesehen.

Eine Möglichkeit, ein Sperrventil in einem Substrat auszubilden ist in Figur 3 gezeigt. Das Substrat umfasst eine Deckplatte 14, in der Aussparungen 15 und ein Durchbruch ausgebildet sind. Der Durchbruch verjüngt sich konisch, um damit den Sitz für ein Rückschlagventil zu bilden. Die Deckplatte 14 ist auf beiden Seiten flächig mit einer Kunststofffolie 16 verbunden, so dass Fluidkanäle gebildet werden. Die beiden Kunststofffolien entsprechen einer Bodenplatte und einer weiteren Deckplatte. Die Deckplatte kann als Spritzgussteil hergestellt sein. Das Rückschlagventil umfasst weiterhin eine Kugel 23, die bei einem Fluidstrom in Sperrrichtung (im gezeigten Beispiel von links nach rechts) in den konischen Sitz gedrückt wird und somit einen Durchfluss verhindert. In Durchlassrichtung kann ein Fluid strömen.

Statt einer Ausbildung des Sperrventils in einem Durchbruch können auch die Fluidkanäle und das Sperrventil in einer Ebene angeordnet sein. In diesem Fall würde sich ein Fluidkanal an der Stelle des Sperrventils zunächst erweitern und dann wieder konisch verjüngen, um den Sitz des Sperrventils zu bilden.

Ein Beispiel einer Flusskammer zur Verwendung in einem Mikrofluidsystem der oben beschriebenen Art ist in Figur 4 illustriert. Die Flusskammer kann insbesondere aus einem Kunststoff hergestellt sein. Die Flusskammer 3 umfasst ein Substrat mit einer Deckplatte 14, in deren Unterseite ein Graben vorgesehen ist. Die Deckplatte 14 ist flächig mit einer Bodenplatte in Form einer Kunststofffolie 16 verbunden, sodass ein Kanal 15 gebildet wird. Dieser Kanal 15 mündet jeweils in ein Flüssigkeitsreservoir 17 und 18. Diese Flüssigkeitsreservoire sind mit einem Abdeckelement 19 bzw. 20 verschlossen, wobei in jedes Abdeckelement ein Schlauch 21 bzw. 22 mündet, mit dem die Flusskammer fluidisch über die Ventilvorrichtung 6 mit den Fluidreservoiren 1 und 2 verbunden wird.

Wenn die Flüssigkeit vom Flüssigkeitsreservoir 17 zum Flüssigkeitsreservoir 18 strömt, ist die Zuflussmündung der Flusskammer auf Seiten des Flüssigkeitsreservoirs 17 unter der Abflussmündung auf Seiten des Flüssigkeitsreservoirs 18 vorgesehen. Auf diese Weise kann eine herkömmliche Flusskammer, wie sie in Figur 3 gezeigt ist, im Zusammenhang mit einem der oben beschriebenen Mikrofluidsysteme eingesetzt werden.

Alternativ dazu können jedoch sowohl die Flusskammer 3 als auch die Flüssigkeitsreservoire 1 und 2 sowie die Ventilvorrichtung 6 und die verbindende Fluidkanalanordnung auf und/oder in einem gemeinsamen Substrat, wie beispielsweise in Figur 3 oder 4 illustriert, vorgesehen sein. Auf einer Seite einer Deckplatte können Gräben analog zu Figur 4 vorgesehen sein, die nach Verbinden der Deckplatte mit einer Kunststofffolie einen Flusskammerkanal, fluidische Verbindungskanäle 4 sowie gegebenenfalls erforderliche Verbindungskanäle der Ventilvorrichtung 6 bilden. In einem solchen Fall wären an den Mündungen des Flusskammerkanals keine Fluidreservoire gemäß der Reservoire 17 und 18 erforderlich. Stattdessen könnten die Fluidreservoire 1 und 2 entsprechend auf dem Substrat ausgebildet sein. Alternativ können die Fluidreservoire 1 und 2 jedoch auch durch in dem Substrat, insbesondere in einer Deckplatte, ausgebildete Gräben, die mit der Kunststofffolie abgedeckt sind, gebildet werden.

Wenn die Fördereinrichtung in einem solchen Fall beispielsweise eine Luftdruckpumpe oder eine Spritzenpumpe umfasst, können diese beispielsweise mittels entsprechender Schläuche, die zum Beispiel mit Gas gefüllt sein können, mit den Fluidreservoiren 1 und 2 auf oder in dem Substrat verbunden sein. Alternativ dazu können insbesondere bei kanalförmigen Fluidreservoiren die entsprechenden Druckvorrichtungen auf der Verwendung von hydrophoben Ferrofluiden beruhen. Diese hydrophoben Ferrofluide würden somit unmittelbar in den entsprechenden Flüssigkeitsreservoirkanal eingebracht sein. Induktionsspulen zur Erzeugung eines entsprechenden Magnetfeldes können unterhalb des Substrats oder auch in dem Substrat angeordnet sein. In diesem Fall können auch die Elemente der Ventilvorrichtung im Substrat vorgesehen sein.

Die Steuerung der Fördereinrichtung und/oder der Ventile kann an oder in den Flüssigkeitsreservoiren, der Fluidkanalanordnung, der Ventilvorrichtung und/oder der Flusskammersensoren angeordnet sein. Diese Sensoren können beispielsweise den Flüssigkeitsstand bestimmen oder das Über- bzw. Unterschreiten eines vorherbestimmten Pegelstandes detektieren. Hierfür können beispielsweise Kondensatoren, deren elektrische Eigenschaften sich bei Flüssigkeitskontakt ändern, oder optische Sensoren, die eine Änderung der Lichtstreuung detektieren, eingesetzt werden.

Bei dem in Figur 1 illustrierten Mikrofluidsystem können sowohl die Pumpe 12 als auch die Ventilvorrichtung 6 durch eine Steuerungseinrichtung 23 gesteuert werden. Diese Steuerungseinrichtung kann beispielsweise ein Schließen bzw. Öffnen der Ventile steuern, sobald die Flüssigkeit in geänderter Richtung gepumpt wird. Die Steuerungseinrichtung 23 kann auch die Pumpe 12, insbesondere deren Pumprichtung, steuern. Diese Steuerung kann auf Ausgabewerten von im Mikrofluidsystem vorgesehenen Sensoren beruhen.

Beim abwechselnden Anlegen von Über- und Unterdruck an nur eines der beiden Fluidreservoire kann das Problem auftreten, dass die Sollwerte des Über- bzw. Unterdrucks von einer Pumpvorrichtung unterschiedlich schnell erreicht werden. Dadurch werden unterschiedliche Flüssigkeitsmengen in beide Richtungen befördert. Dies führt im Allgemeinen zu einer ungleichen Verteilung der Flüssigkeit in beiden Reservoirs bis hin zum Trockenlaufen eines der beiden Reservoire.

Daher kann eine zweite Ventilvorrichtung bereitgestellt werden, die abwechselnd entweder einen Über- oder einen Unterdruck mit Hilfe nur einer Druck- bzw. Pumpvorrichtung an beide Reservoire anlegt, und das jeweils andere Reservoir zum umgebenden Luftdruck öffnet, d.h. gleichsetzt. Diese zusätzliche Ventilvorrichtung weist vier Sperrventile auf, wobei jedes Fluidreservoir über ein Sperrventil mit der Druckvorrichtung und ein anderes Sperrventil mit der Umgebung verbindbar ist.

Nun kann durch eine entsprechende Schaltung der Sperrventile (d.h. Öffnen des Sperrventils, das das erste Reservoir mit der Druckvorrichtung verbindet, und des Sperrventils, das das zweite Reservoir mit der Umgebung verbindet, und Schließen der beiden anderen Sperrventile) beispielsweise das erste Reservoir mit einem Druck von -40mbar beaufschlagt werden und das zweite Reservoir mit der umgebenden Atmosphäre verbunden werden. Es fließt nun Flüssigkeit vom zweiten Reservoir über die erste Ventilvorrichtung und die Flusskammer in das erste Reservoir. Durch Schalten der zweiten Ventilvorrichtung (Sperren der geöffneten Ventile und Öffnen der geschlossenen Ventile) wird analog das zweite Reservoir mit der Druckvorrichtung verbunden, also auf -40mbar gesetzt, und das zweite Reservoir mit der umgebenden Atmosphäre verbunden. Nun fließt die Flüssigkeit vom ersten Reservoir wiederum über die erste Ventilvorrichtung und die Flusskammer in das zweite Reservoir. Da die Pumpe, die den Unterdruck herstellt, in beiden Fällen die gleiche ist, wird der jeweilige Sollwert des Druckes im Allgemeinen gleich schnell erreicht. Dadurch bleiben die Flüssigkeitsstände der Reservoire im Mittel ausgeglichen.

Man kann jeweils die Ventile, beispielsweise Quetschventile, für die Flussregelung (in der ersten Ventilvorrichtung) und für die Luftdruckregelung (in der zweiten Ventilvorrichtung) parallel schalten oder unabhängig voneinander. Im Falle einer parallelen Schaltung schalten beide Ventilvorrichtungen immer gleichzeitig, so dass die Strömungsrichtung des Fluids in der Flusskammer immer gleich bleibt.

Schaltet man die Ventilvorrichtungen unabhängig voneinander, können beispielsweise die Ventile für die Luftdruckregelung (in der zweiten Ventilvorrichtung) in längeren Zeitintervallen geschaltet werden, z.B. im Takt von 30 Sekunden, so dass die Flüssigkeit jeweils 30 Sekunden vom ersten Reservoir über die erste Ventilvorrichtung und die Flusskammer zum zweiten Reservoir und danach wieder 30 Sekunden vom zweiten Reservoir in das erste Reservoir fließt. Schaltet man während dieser Zeitintervalle die erste Ventilvorrichtung für die Flüssigkeitsregelung alle halben Sekunden, wechselt die Flussrichtung des Fluids in der Flusskammer 2 mal pro Sekunde; dies wird auch als oszillierender Fluss bezeichnet. Damit können in der physiologischen Forschung z.B. turbulente Strömungen simuliert werden. Typische Umschaltzeiten für den oszillierenden Fluss sind 0,25 bis 5 Sekunden.

Die zuvor beschriebenen Mikrofluidsysteme können auch mehrere, insbesondere parallel geschaltete, Flusskammern aufweisen, die durchströmt werden. Dabei kann insbesondere jeder Flusskammer ein gesondertes erstes Flüssigkeitsreservoir und zweites Flüssigkeitsreservoir zugeordnet sein. Insbesondere bei der Verwendung einer Luftdruckpumpe können die Flüssigkeiten in allen ersten Flüssigkeitsreservoiren mit einer gemeinsamen Luftdruckpumpe parallel mit Druck beaufschlagt werden.

Auf diese Weise kann eine Druckvorrichtung mehrere Fluidkreisläufe antreiben. Beispielsweise kann eine Luftdruckvorrichtung zur Förderung von Flüssigkeit zwischen vier Reservoirpaaren verwendet werden. Dabei kann für jedes der Reservoirpaare eine erste Ventilvorrichtung für die Flussregelung verwendet werden, die entweder unabhängig oder parallel zu den ersten Ventilvorrichtungen der anderen Reservoirpaare und/oder der zweiten Ventilvorrichtung der Luftdruckregelung geschaltet ist. So kann beispielsweise die erste Ventilvorrichtungen von zwei der Reservoirpaare mit der zweiten Ventilvorrichtung für die Luftdruckregelung gleichgeschaltet werden und z.B. jede Minute einmal schalten, die ersten Ventilvorrichtungen der anderen beiden Paare dagegen mit 0,5 und 1 Sekunden Taktung schalten. Dies würde zu unidirektionalem Fluss in den ersten beiden Flusskammern führen und zu oszillierendem Fluss mit 0,5 und 1 Sekunde Taktung in den beiden anderen Flusskammern führen.

## Patentansprüche

1. Mikrofluidsystem, umfassend:
ein erstes und ein zweites Fluidreservoir (1, 2),
eine Flusskammer (3),
eine Fluidkanalanordnung (7), die derart angeordnet ist, dass das erste Fluidreservoir über die Flusskammer mit dem zweiten Fluidreservoir fluidisch verbunden ist,
eine Fördereinrichtung (12) zum Fördern eines Fluids vom ersten Fluidreservoir über die Flusskammer in das zweite Fluidreservoir, und
eine Ventilvorrichtung,
wobei die Ventilvorrichtung aus einem ersten Zustand in einen zweiten Zustand bringbar ist, so dass im ersten Zustand ein Fluid mittels der Fördereinrichtung vom ersten Fluidreservoir (1) durch die Flusskammer mit einer vorherbestimmten Strömungsrichtung (5) in das zweite Fluidreservoir (2) förderbar ist und im zweiten Zustand ein Fluid mittels der Fördereinrichtung vom zweiten Fluidreservoir durch die Flusskammer mit der vorherbestimmten Strömungsrichtung in das erste Fluidreservoir förderbar ist, und
wobei die Ventilvorrichtung vier Sperrventile und vier Anschlüsse zum fluidischen Verbinden mit dem ersten Fluidreservoir, dem zweiten Fluidreservoir, einer Zuflussmündung der Flusskammer in Strömungsrichtung und einer Abflussmündung der Flusskammer in Strömungsrichtung umfasst,
wobei die Ventilvorrichtung derart ausgebildet ist, dass jedes Fluidreservoir mit der Zuflussmündung und der Abflussmündung fluidisch verbindbar ist, wobei entlang jeder dieser Verbindungen eines der Sperrventile angeordnet ist.

2. Mikrofluidsystem nach Anspruch 1, wobei die Ventilvorrichtung vier Sperrventile (8, 9, 10, 11), die nach Art eines Brückengleichrichters angeordnet sind, umfasst.

3. Mikrofluidsystem nach Anspruch 1 oder 2, wobei wenigstens eines der Sperrventile ein fremdgesteuertes Sperrventil ist.

4. Mikrofluidsystem nach einem der vorangegangenen Ansprüche, wobei wenigstens eines der Sperrventile ein Rückschlagventil ist.

5. Mikrofluidsystem nach einem der vorangegangenen Ansprüche, wobei die Ventilvorrichtung in einem Substrat ausgebildet ist.

6. Mikrofluidsystem nach einem der vorangegangenen Ansprüche, umfassend eine zweite Ventilvorrichtung,
wobei die zweite Ventilvorrichtung vier Sperrventile und vier Anschlüsse zum fluidischen Verbinden mit dem ersten Fluidreservoir, dem zweiten Fluidreservoir, einer Druckvorrichtung und der Umgebung umfasst, wobei die Ventilvorrichtung derart ausgebildet ist, dass jedes Fluidreservoir jeweils über ein Sperrventil mit der Druckvorrichtung und über ein anderes Sperrventil mit der Umgebung verbindbar ist.

7. Mikrofluidsystem nach einem der vorangegangenen Ansprüche, wobei die Fördereinrichtung eine erste Druckvorrichtung, insbesondere eine Luftdruckpumpe, eine Kolbenpumpe, eine Membranpumpe, eine Schlauchquetschpumpe, eine Spritze oder eine Spritzenpumpe, aufweist, um das Innere des ersten Fluidreservoirs mit Druck zu beaufschlagen.

8. Mikrofluidsystem nach einem der vorangegangenen Ansprüche, wobei das Fluid eine Flüssigkeit ist und die Fördereinrichtung ein hydrophobes Ferrofluid umfasst, das derart in dem ersten Fluidreservoir angeordnet ist, dass die Flüssigkeit mittels eines Magnetfeldes über das Ferrofluid mit Druck beaufschlagbar ist.

9. Mikrofluidsystem nach einem der vorangegangenen Ansprüche, wobei die Fördereinrichtung ein Entlüftungsmittel aufweist, das am zweiten Fluidreservoir angeordnet ist.

10. Mikrofluidsystem nach einem der vorangegangenen Ansprüche, wobei die Fördereinrichtung einen kolben aufweist, der derart angeordnet ist, dass das Innere des ersten Fluidreservoirs mit Druck beaufschlagbar ist.

11. Mikrofluidsystem nach einem der vorangegangenen Ansprüche, wobei die Fördereinrichtung einen Kolben aufweist, der derart angeordnet ist, dass er durch in das zweite Fluidreservoir gefördertes Fluid bewegbar ist.

12. Mikrofluidsystem nach einem der vorangegangenen Ansprüche, wobei wenigstens ein Teil des ersten und/oder des zweiten Fluidreservoirs durch einen Spritzenzylinder gebildet ist.

13. Mikrofluidsystem nach einem der vorangegangenen Ansprüche, wobei das Fluid eine Flüssigkeit ist und die Fördereinrichtung derart ausgebildet ist, dass zwischen dem Fluid und wenigstens einer Druckvorrichtung eine fluidische Verbindung bereitgestellt ist, in der wenigstens teilweise ein Gas vorgesehen ist.

14. Mikrofluidsystem nach einem der vorangegangenen Ansprüche, wobei die Fördereinrichtung eine zweite Druckvorrichtung, insbesondere eine Luftdruckpumpe, eine Kolbenpumpe, eine Membranpumpe, eine Schlauchquetschpumpe, eine Spritze oder eine Spritzenpumpe, aufweist, um das Innere des zweiten Fluidreservoirs mit Druck zu beaufschlagen.

15. Mikrofluidsystem nach einem der vorangegangenen Ansprüche, wobei die Fördereinrichtung derart ausgebildet ist, dass das Innere des zweiten Fluidreservoirs mit einem Unterdruck beaufschlagbar ist, während die erste Druckvorrichtung das Innere des ersten Fluidreservoirs mit einem Überdruck beaufschlagt.

16. Mikrofluidsystem nach einem der vorangegangenen Ansprüche, weiterhin umfassend eine Sensoreinrichtung zum Bestimmen eines Fluidstroms, eines Fluidstands und/oder eines Fluiddrucks im Mikrofluidsystem.

17. Mikrofluidsystem nach einem der vorangegangenen Ansprüche, weiterhin umfassend eine Steuerungseinrichtung zum Steuern der Ventilvorrichtung, der Fördereinrichtung und/oder der Sensoreinrichtung.

18. Mikrofluidsystem nach Anspruch 17, wobei die Steuerungseinrichtung derart ausgebildet ist, dass die Flusskammer kontinuierlich mit dem Fluid durchströmbar ist.

19. Mikrofluidsystem nach Anspruch 17 oder 18, wobei die Ventilvorrichtung vier fremdgesteuerte Sperrventile umfasst und die Steuerungseinrichtung zum Steuern der Ventilvorrichtung derart ausgebildet ist, dass gleichzeitig jeweils zwei Sperrventile geschlossen und zwei Sperrventile geöffnet werden.

## Claims

1. Microfluid system, comprising:
a first and a second fluid reservoir (1, 2),
a flow chamber (3),
a fluid channel arrangement (7) which is arranged in such a way that the first fluid reservoir is connected fluidically to the second fluid reservoir via the flow chamber,
a conveying means (12) for conveying a fluid from the first fluid reservoir into the second fluid reservoir via the flow chamber, and
a valve device,
wherein the valve device can be brought from a first state to a second state so that, in the first state, a fluid can be conveyed by the conveying means from the first fluid reservoir (1) through the flow chamber in a predetermined direction of flow (5) into the second fluid reservoir (2) and, in the second state, a fluid can be conveyed by the conveying means from the second fluid reservoir through the flow chamber in the predetermined direction of flow into the first fluid reservoir, and
wherein the valve device comprises four stop valves and four connectors for fluidic connection to the first fluid reservoir, the second fluid reservoir, an inlet opening of the flow chamber in the direction of flow and a discharge opening of the flow chamber in the direction of flow, wherein the valve device is embodied in such a way that each fluid reservoir can be connected fluidically to the inlet opening and the discharge opening, wherein along each of the connections, one of the stop valves is provided.

2. Microfluid system according to claim 1, wherein the valve device comprises four stop valves (8, 9, 10, 11) arranged in the style of a bridge rectifier.

3. Microfluid system according to claim 1 or 2, wherein at least one of the stop valves is an externally controlled stop valve.

4. Microfluid system according to any one of the preceding claims, wherein at least one of the stop valves is a non-return valve.

5. Microfluid system according to any one of the preceding claims, wherein the valve device is embodied in a substrate.

6. Microfluid system according to any one of the preceding claims, comprising a second valve device,
wherein the second valve device comprises four stop valves and four connectors for fluidic connection to the first fluid reservoir, the second fluid reservoir, a pressurising device and the environment, wherein the valve device is embodied in such a way that each fluid reservoir can be connected in each case to the pressurising device via one stop valve and to the environment via another stop valve.

7. Microfluid system according to any one of the preceding claims, wherein the conveying means comprises a first pressurising device, in particular a air pressure pump, a piston pump, a diaphragm pump, a peristaltic pump, a syringe or a syringe pump, in order to pressurise the interior of the first fluid reservoir.

8. Microfluid system according to any one of the preceding claims, wherein the fluid is a liquid and the conveying means comprises a hydrophobic ferrofluid arranged in the first fluid reservoir in such a way that the liquid can be pressurised via the ferrofluid by means of a magnetic field.

9. Microfluid system according to any one of the preceding claims, wherein the conveying means comprises an air vent means arranged on the second fluid reservoir.

10. Microfluid system according to any one of the preceding claims, wherein the conveying means comprises a piston arranged in such a way that the interior of the first fluid reservoir can be pressurised.

11. Microfluid system according to any one of the preceding claims, wherein the conveying means comprises a piston arranged in such a way that it can be moved by fluid conveyed into the second fluid reservoir.

12. Microfluid system according to any one of the preceding claims, wherein at least a part of the first and/or of the second fluid reservoir is formed by a syringe cylinder.

13. Microfluid system according to any one of the preceding claims, wherein the fluid is a liquid and the conveying means is embodied in such a way that a fluidic connection is established between the fluid and at least one pressurising device, in which a gas is provided at least partially.

14. Microfluid system according to any one of the preceding claims, wherein the conveying means comprises a second pressurising device, in particular a air pressure pump, a piston pump, a diaphragm pump, a peristaltic pump, a syringe or a syringe pump in order to pressurise the interior of the second fluid reservoir.

15. Microfluid system according to any one of the preceding claims, wherein the conveying means is embodied in such a way that an underpressure can be applied to the interior of the second fluid reservoir, while the first pressurising device applies an overpressure to the interior of the first fluid reservoir.

16. Microfluid system according to any one of the preceding claims, further comprising a sensor means for determining a fluid flow, a fluid level and/or a fluid pressure in the microfluid system.

17. Microfluid system according to any one of the preceding claims, further comprising a control means for controlling the valve device, the conveying means and/or the sensor means.

18. Microfluid system according to claim 17, wherein the control means is embodied in such a way that the fluid can flow continuously through the flow chamber.

19. Microfluid system according to claim 17 or 18,
wherein the valve device comprises four externally controlled stop valves and the control means for controlling the valve device is embodied in such a way that simultaneously two respective stop valves are closed and two respective stop valves are open.

## Revendications

1. Système microfluidique comprenant :
un premier et un deuxième réservoir pour le fluide (1, 2) ;
une chambre de flux (3) ;
un agencement de canaux pour le fluide (7) qui est disposé de telle sorte que le premier réservoir pour le fluide est relié par fluide via la chambre de flux au deuxième réservoir pour le fluide ;
un mécanisme de transport (12) pour le transport d'un fluide depuis le premier réservoir pour le fluide via la chambre de flux jusque dans le deuxième réservoir pour le fluide ; et
un dispositif faisant office de soupape
dans lequel le dispositif faisant office de soupape peut être amené d'un premier état à un deuxième état, de telle sorte que, dans le premier état, un fluide peut être transporté au moyen du mécanisme de transport depuis le premier réservoir pour le fluide (1) à travers la chambre de flux dans une direction d'écoulement prédéterminée (5) jusque dans le deuxième réservoir pour le fluide (2), et, dans le deuxième état, un fluide peut être transporté au moyen du mécanisme de transport depuis le deuxième réservoir pour le fluide à travers la chambre de flux dans la direction d'écoulement prédéterminée jusque dans le premier réservoir pour le fluide ; et
dans lequel le dispositif faisant office de soupape comprend quatre soupapes d'arrêt et quatre raccords pour la liaison par fluide avec le premier réservoir pour le fluide, avec le deuxième réservoir pour le fluide, avec un orifice d'entrée de la chambre de flux dans la direction d'écoulement et avec un orifice de sortie de la chambre de flux dans la direction d'écoulement, le dispositif faisant office de soupape étant réalisé de telle sorte que chaque réservoir pour le fluide peut être relié par fluide avec l'orifice d'entrée et avec l'orifice de sortie, de telle sorte qu' une soupape d'arrêt est disposée le long de chaque liaison.

2. Système microfluidique selon la revendication 1,
dans lequel le dispositif faisant office de soupape comprend quatre soupapes d'arrêt (8, 9, 10, 11) qui sont disposées à la manière d'un redresseur à pont.

3. Système microfluidique selon la revendication 1 ou 2, dans lequel au moins une des soupapes d'arrêt représente une soupape d'arrêt commandée de l'extérieur.

4. Système microfluidique selon l'une quelconque des revendications précédentes, dans lequel au moins une des soupapes d'arrêt est une soupape antiretour.

5. Système microfluidique selon l'une quelconque des revendications précédentes, dans lequel le dispositif faisant office de soupape est réalisé dans un substrat.

6. Système microfluidique selon l'une quelconque des revendications précédentes, comprenant un deuxième dispositif faisant office de soupape,
dans lequel le deuxième dispositif faisant office de soupape comprend quatre soupapes d'arrêt et quatre raccords pour la liaison par fluide avec le premier réservoir pour le fluide, avec le deuxième réservoir pour le fluide, avec un dispositif sous pression et avec l'environnement, le dispositif faisant office de soupape étant réalisé de telle sorte que chaque réservoir pour le fluide peut être relié respectivement via une soupape d'arrêt au dispositif sous pression et via une autre soupape d'arrêt à l'environnement.

7. Système microfluidique selon l'une quelconque des revendications précédentes, dans lequel le mécanisme de transport présente un premier dispositif sous pression, en particulier une pompe pneumatique, une pompe à piston, une pompe à membrane, une pompe péristaltique, une seringue ou une pompe à injection, pour solliciter avec de la pression l'intérieur du premier réservoir pour le fluide.

8. Système microfluidique selon l'une quelconque des revendications précédentes, dans lequel le fluide est un liquide et le mécanisme de transport comprend un ferrofluide hydrophobe qui est disposé dans le premier réservoir pour le fluide de telle sorte que le liquide peut être sollicité avec de la pression au moyen d'un champ magnétique via le ferrofluide.

9. Système microfluidique selon l'une quelconque des revendications précédentes, dans lequel le mécanisme de transport présente un moyen d'aération qui est monté sur le deuxième réservoir pour le fluide.

10. Système microfluidique selon l'une quelconque des revendications précédentes, dans lequel le mécanisme de transport présente un piston qui est disposé de telle sorte que l'intérieur du premier réservoir pour le fluide peut être sollicité avec de la pression.

11. Système microfluidique selon l'une quelconque des revendications précédentes, dans lequel le mécanisme de transport présente un piston qui est disposé de telle sorte qu'il peut se déplacer via le fluide qui est transporté dans le deuxième réservoir pour le fluide.

12. Système microfluidique selon l'une quelconque des revendications précédentes, dans lequel au moins une partie du premier et/ou du deuxième réservoir pour le fluide est formée par un cylindre de seringue.

13. Système microfluidique selon l'une quelconque des revendications précédentes, dans lequel le fluide est un liquide et le mécanisme de transport est réalisé de telle sorte que l'on dispose, entre le fluide et au moins un dispositif sous pression, d'une liaison par fluide, dans laquelle on prévoit au moins en partie un gaz.

14. Système microfluidique selon l'une quelconque des revendications précédentes, dans lequel le mécanisme de transport présente un deuxième dispositif sous pression, en particulier une pompe pneumatique, une pompe à piston, une pompe à membrane, une pompe péristaltique, une seringue ou une pompe à injection, pour solliciter avec de la pression l'intérieur du deuxième réservoir pour le fluide.

15. Système microfluidique selon l'une quelconque des revendications précédentes, dans lequel l'intérieur du deuxième réservoir pour le fluide peut être sollicité avec du vide, tandis que le premier dispositif sous pression sollicite l'intérieur du premier réservoir pour le fluide avec une surpression.

16. Système microfluidique selon l'une quelconque des revendications précédentes, comprenant en outre un mécanisme de détection pour déterminer un courant de fluide, un niveau de fluide et/ou une pression de fluide dans le système microfluidique.

17. Système microfluidique selon l'une quelconque des revendications précédentes, comprenant en outre un mécanisme de commande pour la commande du dispositif faisant office de soupape, du mécanisme de transport et/ou du mécanisme de détection.

18. Système microfluidique selon la revendication 17,
dans lequel le mécanisme de commande est réalisé de telle sorte que la chambre de flux peut être traversée en continu avec le fluide.

19. Système microfluidique selon la revendication 17 ou 18, dans lequel le dispositif faisant office de soupape comprend quatre soupapes d'arrêt commandées de l'extérieur et le mécanisme de commande pour la commande du dispositif faisant office de soupape est réalisé de telle sorte que, dans le même temps, respectivement deux soupapes d'arrêt sont fermées et deux soupapes d'arrêt sont ouvertes.
